# EUROPÄISCHE PATENTSCHRIFT

(11) **EP 2 522 478 B1**
(45) Veröffentlichungstag und Bekanntmachung des Hinweises auf die Patenterteilung: **20.12.2017**
(21) Anmeldenummer: 12002811.3
(22) Anmeldetag: 21.04.2012
(51) Int. Cl.: B28B 11/04, B28B 19/00, B32B 7/12, B32B 13/12, B32B 27/30, B32B 27/32, B32B 27/34

(54) **Verfahren zur Herstellung dünnwandiger Betonplatten, sowie mit dem Verfahren hergestellte Platten**
Method for producing thin-walled concrete panels and panels obtained by this process
Procédé de fabrication de plaques de béton à paroi fine et panneaux fabriqués suivant le procédé

(30) Priorität: 13.05.2011 DE 102011101485
(43) Veröffentlichungstag der Anmeldung: 14.11.2012
(73) Patentinhaber: Benno Drössler GmbH & Co, Bauunternehmung KG, 57080 Siegen (DE)
(72) Erfinder: Drößler, Christian, 57072 Siegen (DE)
(74) Vertreter: Grosse, Wolf-Dietrich Rüdiger

(56) Entgegenhaltungen:
- EP-A2- 1 006 094
- DE-A1- 10 343 970
- FR-A2- 2 553 157
- JP-A- H0 459 649
- JP-A- 2008 194 900

## Beschreibung

Die Erfindung betrifft ein Verfahren zur Herstellung dünnwandiger Betonplatten, bei dem die Betonplatten in einer Gießform gegossen werden.

Durch das Verfahren zur Behandlung von Betonkörpern gemäß der DE103 43 970 A1 ist es bekannt, Frischbeton zum Schutz vor Verdunstung derart nachzubehandeln, dass alle wesentlichen freiliegenden Oberflächenteile des erstellten Betonkörpers mit einer dampfundurchlässigen Folie dauerhaft verbunden werden. Hier dient die Folie dazu, ein ungewolltes Verdunsten von nicht gebundenem Wasser zu verhindern.

Die FR 2 553 157 A2 offenbart ein ähnliches Verfahren. Hier werden Kunststofffolien auf den Frischbeton aufgepresst. Die Kunststofffolien dienen später der thermischen oder akustischen Isolierung.

Durch die EP 1 006 094 A2 gehört ein Verfahren zum Beschichten eines nicht ausgehärteten mineralischen Substrats zum Stand der Technik, bei dem vor dem Trocknen und Aushärten des Substrats mehrfach wässrig Zusammensetzungen polymerer Bindemittel auf das Substrat aufgebracht werden, um nach Trocknung des Bindemittels dem Substrat ein hohes Glanzfinish zu verleihen.

Die JP 2008 19490 A offenbart die Behandlung von verfestigten Blöcken aus hochfestem Beton. Um Rissbildungen am Betonblock zu verhindern wird, nachdem dieser gegossen worden ist, ein Schutzfilm auf den Betonblock aufgebracht. Der Schutzfilm bietet Frost- und Schmelzvorgängen großen Widerstand.

Die JP H 04 596 49A offenbart Spannbeton, bei dessen Herstellung ein filzartiges Geflecht mit Löchern auf die Oberfläche des Betons aufgebracht wird. Der Beton kann dabei durch die Löcher hindurchtreten und umschließt das filzartige Geflecht teilweise. Dadurch wird der Spannbeton an seiner Außenseite mit einem Oberflächenschutz versehen.

Es ist auch bekannt, Fassadenelemente über Distanzstücke vor der eigentlichen Fassade eines Gebäudes abzuhängen. Derartige Fassadenelemente dienen als Verkleidung des Bauwerkes und bieten einen Schnee- und Regenschutz für thermische Dämmschichten und verleihen dem Bauwerk ein gefälliges Aussehen.

Solche Fassadenplatten können dünnwandige Betonplatten sein. Diese können beispielsweise mit sogenannten Glashebern auf der glatten Außenfläche der Fassadenplatten erfasst und in ihre an der Wand des Gebäudes angebrachte Befestigungspunkte mit den Distanzstücken eingehängt werden.

Derartig dünnwandige Betonplatten können aber auch auf vielen anderen Gebieten wie z.B. als Trennwände, Tischplatten, Wänden von Transportbehältnissen usw. zur Anwendung kommen.

Zur Herstellung derartiger dünnwandiger Betonplatten beispielsweise als Fassadenelemente oder Fassadenplatten werden diese in einer Form gegossen, wobei die glatte Sichtseite der Betonplatten in der Gießform unten liegt. Die Oberseite der Betonplatten in der Gießform, die Rückseite der Fassadenplatten, kann dagegen porös sein.

Dünnwandige Betonplatten in Stärken von 8 bis 50 mm aus Hochleistungsbeton (HPC) oder ultrahochfestem Beton (UHFB - engl. UHPC - Ultra High Performance Concrete) weisen sehr hohe Zug- und Druckfestigkeiten auf, sind jedoch aufgrund ihres sehr dichten Gefüges sehr spröde.

Das Einbringen einer Bewehrung oder Fasern zur Erhöhung der Festigkeit und des Verletzungsschutzes ist jedoch bei den dünnwandigen HPC- oder UHPC- Betonplatten problematisch, da Gefügestörungen auftreten können und die Verarbeitbarkeit des HPC- oder UHPC- Betons herabgesetzt wird.

Eine zielsichere Herstellung und Erreichung der geforderten mechanischen Kennwerte ist nicht gewährleistet. Die porenarme und lunkerfreie Gestaltung der Oberfläche ist durch die Verschlechterung der selbstverdichtenden Eigenschaften nicht zielsicher erreichbar. Daher sind beispielsweise textile Bewehrungen oder Faserzugaben bei sehr dünnwandigen Querschnitten aus HPC- oder UHPC- Beton nicht zielführend.

Die Erfindung geht von der Aufgabe aus, eine Betonplatte sowie ein Verfahren der eingangs genannten Art derart auszubilden, dass dünnwandige Betonplatten mit erhöhtem Verletzungsschutz ohne Verschlechterung der Verarbeitbarkeit, und ohne Verringerung der mechanischen Zug- und Druckfestigkeiten herstellbar sind.

Die Aufgabe wird für ein Verfahren erfindungsgemäß durch die im Patentanspruch 1 angegebenen Merkmale und für eine Betonplatte durch die Merkmale des Anspruchs 9 gelöst. Vorteilhafte Ausbildungen sind in den abhängigen Patentansprüchen aufgezeigt.

Die Aufgabe wird erfindungsgemäß dadurch gelöst, dass nach dem Gießen wenigstens einer Betonschicht wenigstens eine dünne Kunststoffschicht als Verbundschicht aufgebracht wird, wobei die Betonschicht eine HPC- oder UHPC- Betonschicht ist, und die aufgetragene Kunststoffschicht Aussparungen oder Öffnungen aufweist, so dass hierdurch der Schubverbund frisch in frisch zur nächsten Lage HPC- oder UHPC- Beton erfolgt.

Durch diese Kunststoffschicht, beispielsweise eine Kunststofffolie, wird erreicht, dass die Betonplatten bei einem Stoß oder Schlag nicht so leicht zerspringen, oder beim Zerspringen nicht in vielen Einzelteilen z.B. von der Fassade herunterfallen, so dass sie einen erhöhten Verletzungsschutz aufweisen und ohne Verringerung der mechanischen Zug- und Druckfestigkeiten herstellbar sind.

Es hat sich als vorteilhaft erwiesen, wenn die aufgetragene Kunststoffschicht eine Kunststofffolie und/oder ein Gießharz ist.

Die zur Verstärkung dieser dünnwandigen Betonplatten und zur Erhöhung des Verletzungsschutzes aufgetragene Kunststoffschicht kann erfindungsgemäß eine PVB-, eine EVA- und/oder eine PA-Kunststofffolie sein.

In vorteilhafter Weise kann die aufgetragene Kunststoffschicht in wenigstens einer Lage aufgebracht werden.

Es hat sich als vorteilhaft erwiesen, wenn die aufgetragene Kunststoffschicht auf den Frischbeton einer bereits gegossenen Betonschicht aufgewalzt und/oder mittels eines Klebers verklebt wird, wobei der Kleber erfindungsgemäß auf organischer oder mineralischer Basis aufgebaut oder der Frischbeton selber sein kann.

Vorzugsweise bei dickeren Betonplatten, z.B. bis 50mm Dicke, mit mehreren Betonschichten hat es sich für den Zusammenhalt als vorteilhaft erwiesen, wenn die Anzahl und Lage der Aussparungen bzw. Öffnungen in der Kunststoffschicht von der Größe und der Geometrie der Betonplatten bestimmt werden.

Die Erfindung ist nachfolgend anhand von in der Zeichnung dargestellten Ausführungsbeispielen näher erläutert. Es zeigen:
- Fig.1: eine nach einem Verfahren hergestellte dünnwandige Betonplatte, bei der jedoch nicht alle erfindungsgemäßen Merkmale verwirklicht sind,
- Fig.2: eine Zwischenstufe einer nach dem erfindungsgemäßen Verfahren hergestellten doppelschichtigen Betonplatte und
- Fig. 3: eine nach dem erfindungsgemäßen Verfahren hergestellte doppelschichtige Betonplatte.

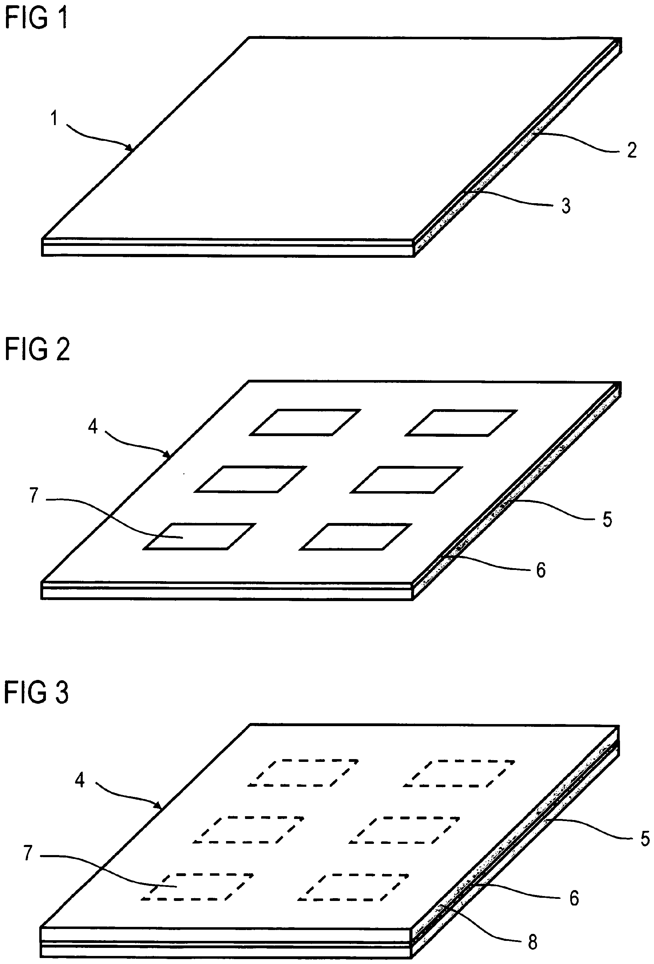

In der Figur 1 ist eine dünnwandige Betonplatte 1 dargestellt, die aus einer Betonschicht 2 besteht, auf die eine dünne Kunststoffschicht 3, beispielsweise eine PVB-, eine EVA- und/oder eine PA-Kunststofffolie zur Verstärkung der Betonplatte 1 aufgebracht ist, so dass die Betonplatte 1 mit der Kunststoffschicht 3 einen Verbund bilden.

PVB ist die Abkürzung für Polyvinylbutyral, mit EVA wird Ethylen-Vinylacetat abgekürzt und PA bezeichnen Polyamide.

Die Kunststoffschicht 3 wird dabei auf eine bereits gegossene Betonschicht 2 dadurch aufgebracht, indem sie auf den Frischbeton aufgewalzt und/oder als Kunststofffolie verklebt wird. Der Kleber kann dabei auf organischer oder mineralischer Basis aufgebaut sein. Als Kleber kann aber auch der Frischbeton selber dienen.

Die Figur 2 zeigt eine Zwischenstufe bei der Herstellung einer doppelschichtigen Betonplatte 4 beispielsweise für Fassaden, bei der eine erste Betonschicht 5 in einer nicht dargestellten Gießform gegossen wird, wobei die glatte Sichtseite in der Gießform unten liegt. Auf diese erste Betonschicht 5 ist eine Kunststofffolie 6 aufgebracht, die hier vergrößert dargestellt Aussparungen oder Öffnungen 7 aufweist. Auf diese Kunststofffolie 6 wird dann, wie in Figur 3 gezeigt ist, eine zweite Betonschicht 8 aufgetragen.

Um den Verbund zu einer weiteren Lage z.B. UHPC- Beton herzustellen wird die Kunststofffolie 6 an geeigneten Stellen mittels den Öffnungen 7 ausgespart, so dass hier der Schubverbund frisch in frisch zur nächsten Lage der Betonschicht 8 erfolgen kann. Anzahl, Größe und Lage der Aussparungen bzw. Öffnungen 7 hängen von der Größe und der Geometrie der Betonplatten 4 ab. Die Folie kann zusätzlich auch auf die Rückseite der Betonplatte aufgebracht und aufgeklebt werden, ohne dass eine weitere Lage Betonschicht 8 aufgebracht werden muss. Anstelle einer Folie kann auch ein Gießharz auf die Rückseite der Betonplatte aufgebracht werden.

Durch das Aufkleben einer oder mehrerer Lagen von beispielsweise PVB- Kunststofffolien werden die dünnwandigen, mehrschichtigen Betonplatten 4 verstärkt, so dass insbesondere für den Fall eines Bruches beispielsweise infolge von Schlageinwirkungen auf die Betonplatten 4 sich das Verletzungsrisiko verringert, da die Betonplatten 4 nicht in einzelne herumfliegende Teile zerbrechen, sondern die zerbrochenen Teile durch die Kunststofffolien zusammengehalten werden.

Um bei dünnwandigen Betonplatten der Stärken 8 bis 50 mm den Verletzungsschutz für den Fall eines Sprödbruches beispielsweise infolge von Schlageinwirkungen zu erhöhen, werden die dünnwandigen Betonplatten erfindungsgemäß durch das Aufkleben einer oder mehrerer Lagen einer Kunststofffolie als Kunststoffschicht 6, beispielsweise einer PVB- Kunststofffolie, verstärkt. Die Kunststoffschicht 6 wird dabei auf eine bereits betonierte Schicht 5 derart aufgebracht, dass sie auf den Frischbeton aufgewalzt und verklebt werden. Der Kleber kann dabei auf organischer oder mineralischer Basis aufgebaut sein. Der Kleber kann der Frischbeton selber sein. Um den Verbund zu einer weiteren Lage HPC- oder UHPC- Beton herzustellen wird die Kunststoffschicht 6 an geeigneten Stellen ausgespart, so dass hier der Schubverbund frisch in frisch zur nächsten Lage HPC- oder UHPC- Beton erfolgt.

Durch diese Kunststoffschicht 6 wird keine Armierung der dünnwandigen Betonplatten erreicht, sondern durch die Verbundplatten dafür gesorgt, dass diese z.B. bei einem Stoß oder Schlag nicht so leicht zerspringen, und wenn sie doch zerspringen, die Einzelteile noch über die Kunststoffschicht 6 zusammen gehalten werden.

### Bezugszeichenliste

- 1.: dünnwandige Betonplatte
- 2.: Betonschicht
- 3.: Kunststoffschicht
- 4.: mehrschichtige Betonplatte
- 5.: erste Betonschicht
- 6.: Kunststofffolie
- 7.: Öffnungen
- 8.: zweite Betonschicht

## Patentansprüche

1. Verfahren zur Herstellung dünnwandiger Betonplatten (4) mit Stärken von 8 bis 50 mm, bei dem die Betonplatten (4) in einer Gießform gegossen werden, wobei nach dem Gießen wenigstens einer Betonschicht (5) wenigstens eine dünne Kunststoffschicht (6) als Verbundschicht aufgebracht wird, wobei die Betonschicht (5) eine HPC- oder UHPC- Betonschicht ist, und die aufgetragene Kunststoffschicht (6) Aussparungen oder Öffnungen (7) aufweist, so dass hierdurch der Schubverbund frisch in frisch zur nächsten Lage HPC- oder UHPC- Beton erfolgt.

2. Verfahren nach Anspruch 1,
**dadurch gekennzeichnet,**
**dass** die aufgetragene Kunststoffschicht (6) eine Kunststofffolie und/oder ein Gießharz ist.

3. Verfahren nach einem der Ansprüche 1 bis 2,
**dadurch gekennzeichnet,**
**dass** die aufgetragene Kunststoffschicht (6) eine PVB-, eine EVA- und/oder eine PA-Kunststofffolie ist.

4. Verfahren nach einem der Ansprüche 1 bis 3,
**dadurch gekennzeichnet,**
**dass** die aufgetragene Kunststoffschicht (6) in wenigstens einer Lage aufgebracht wird.

5. Verfahren nach einem der Ansprüche 1 bis 4,
**dadurch gekennzeichnet,**
**dass** die aufgetragene Kunststoffschicht (6) auf den Frischbeton einer bereits gegossenen Betonschicht (5) aufgewalzt und/oder mittels eines Klebers verklebt wird.

6. Verfahren nach Anspruch 5,
**dadurch gekennzeichnet,**
**dass** der Kleber auf organischer oder mineralischer Basis aufgebaut ist.

7. Verfahren nach Anspruch 5 oder 6,
**dadurch gekennzeichnet,**
**dass** der Kleber der Frischbeton selber ist.

8. Verfahren nach einem der Ansprüche 1 bis 7,
**dadurch gekennzeichnet,**
**dass** die Anzahl und Lage der Aussparungen bzw. Öffnungen (7) von der Größe und der Geometrie der Betonplatten (4) bestimmt werden.

9. Dünnwandige Betonplatte mit Stärken von 8 bis 50 mm hergestellt nach dem Verfahren nach mindestens einem der Ansprüche 1 bis 8,
**dadurch gekennzeichnet,**
**dass** die dünnwandige Betonplatte als mehrschichtige Betonplatte (4) mit mindestens einer ersten Betonschicht (5) aus HPC- oder UHPC- Beton, mindestens einer dünnen Kunststoffschicht (6) die Aussparungen oder Öffnungen (7) aufweist, und im Schubverbund frisch in frisch mit mindestens einer zweiten Betonschicht (8) aus HPC- oder UHPC- Beton als Verbundplatte aufgebaut ist.

## Claims

1. A method for producing thin-walled concrete slabs (4) with thicknesses of 8 to 50 mm, in which method the concrete slabs (4) are cast in a casting mould, wherein, after casting of at least one concrete layer (5), at least one thin plastic layer (6) is applied as a bonding layer, wherein the concrete layer (5) is an HPC concrete layer or UHPC concrete layer, and the applied plastic layer (6) has cut-outs or openings (7) so that the shear bond to the next layer of HPC concrete or UHPC concrete takes place, wet on wet, through said cut-outs or openings.

2. The method according to Claim 1,
**characterised in that**
the applied plastic layer (6) is a plastic film and/or a casting resin.

3. The method according to any one of Claims 1 to 2,
**characterised in that**
the applied plastic layer (6) is a PVB-, EVA- and/or PA-plastic film.

4. The method according to any one of Claims 1 to 3,
**characterised in that**
the applied plastic layer (6) is applied in at least one coating.

5. The method according to any one of Claims 1 to 4,
**characterised in that**
the applied plastic layer (6) is rolled and/or adhesively bonded by means of an adhesive onto the wet concrete of an already cast concrete layer (5).

6. The method according to Claim 5,
**characterised in that**
the adhesive has an organic or mineral basis.

7. The method according to Claim 5 or 6,
**characterised in that**
the adhesive is the wet concrete itself.

8. The method according to any one of Claims 1 to 7,
**characterised in that**
the number and position of the cut-outs or openings (7) are determined by the size and the geometry of the concrete slabs (4).

9. A thin-walled concrete slab with thicknesses of 8 to 50 mm produced by the method according to at least one of Claims 1 to 8,
**characterised in that**
the thin-walled concrete slab is constructed as a composite slab in the form of a multi-layered concrete slab (4) with at least one first concrete layer (5), which consists of HPC concrete or UHPC concrete, at least one thin plastic layer (6), which has cut-outs or openings (7), and in a wet-on-wet shear bond, at least one second concrete layer (8) consisting of HPC concrete or UHPC concrete.

## Revendications

1. Procédé de fabrication de plaques de béton à paroi mince (4) avec des épaisseurs de 8 à 50 mm, pour lequel les plaques de béton (4) sont coulées dans un moule de coulée, au moins une couche de matière plastique (6) mince étant appliquée comme couche composite après la coulée d'au moins une couche de béton (5), la couche de béton (5) étant une couche de béton à hautes performances (BHP) ou à ultra- hautes performances (BUHP) et la couche de matière plastique (6) appliquée comportant des évidements ou ouvertures (7) de telle sorte que le composite résistant au cisaillement est ainsi réalisé « frais sur frais » pour la position suivante du béton à hautes performances (BHP) ou à ultra-hautes performances (BUHP).

2. Procédé selon la revendication 1,
**caractérisé en ce que**
la couche de matière plastique (6) appliquée est une feuille de matière plastique et/ou une résine coulée.

3. Procédé selon l'une quelconque des revendications 1 à 2,
**caractérisé en ce que**
la couche de matière plastique (6) appliquée est une feuille de polybutyral de vinyle (PBV), d'éthylène acétate de vinyle (EAV) et/ou de polyamide (PA).

4. Procédé selon l'une quelconque des revendications 1 à 3,
**caractérisé en ce que**
la couche de matière plastique (6) appliquée est appliquée en au moins une position.

5. Procédé selon l'une quelconque des revendications 1 à 4,
**caractérisé en ce que**
la couche de matière plastique (6) appliquée sur le béton frais d'une couche de béton (5) déjà coulée est laminée et/ou collée au moyen d'un adhésif.

6. Procédé selon la revendication 5,
**caractérisé en ce que**
l'adhésif est constitué sur une base organique ou minérale.

7. Procédé selon la revendication 5 ou 6,
**caractérisé en ce que**
l'adhésif est le béton frais lui-même.

8. Procédé selon l'une quelconque des revendications 1 à 7,
**caractérisé en ce que**
le nombre et la position des évidements ou ouvertures (7) sont déterminés par la taille et la géométrie des plaques de béton (4).

9. Plaques de béton à paroi mince avec des épaisseurs de 8 à 50 mm fabriquées selon le procédé selon au moins l'une quelconque des revendications 1 à 8,
**caractérisé en ce que**
la plaque de béton à paroi mince en tant que plaque de béton multicouches (4) avec au moins une première couche de béton (5) en béton à hautes performances (BHP) ou ultra-hautes performances (BUHP), au moins une couche de matière plastique mince (6) comporte les évidements ou ouvertures (7) et est constituée en tant que plaque composite dans le composite résistant au cisaillement « frais sur frais » avec au moins une deuxième couche de béton (8) en béton à hautes performances (BHP) ou ultra-hautes performances(BUHP).
